# EUROPEAN PATENT SPECIFICATION

(11) **EP 4 135 382 B1**
(45) Date of publication and mention of the grant of the patent: **25.09.2024**
(21) Application number: 22199557.4
(22) Date of filing: 09.10.2020
(51) Int. Cl.: H04W 12/06, H04W 88/06, H04W 36/00, H04W 74/00, H04W 48/18

(54) **ALTERNATIVE CELLULAR CONNECTIVITY FOR MOBILE TERMINALS**
ALTERNATIVE ZELLULARE KONNEKTIVITÄT FÜR MOBILE ENDGERÄTE
CONNECTIVITÉ CELLULAIRE ALTERNATIVE POUR TERMINAUX MOBILES

(43) Date of publication of application: 15.02.2023
(62) Divisional of application: 20201132.6
(73) Proprietor: Deutsche Telekom AG, 53113 Bonn (DE)
(72) Inventor: HENZE, Thomas, 53173 Bonn (DE); AMEND, Markus, 63667 Nidda (DE); HELLEBRAND, Katja, 61118 Bad Vilbel (DE); Bogenfeld, Eckard, 67316 Carlsberg (DE)
(74) Representative: Braun-Dullaeus Pannen Emmerling Patent- & Rechtsanwaltspartnerschaft mbB

(56) References cited:
- EP-A1- 3 310 018
- US-A1- 2018 317 081

## Description

The invention relates to a method and a mobile terminal for providing a connection between a mobile terminal and a first core network of a first cellular network if the access to the first cellular network is impaired.

Even today, there occur many situations in which a network provider cannot guarantee that user has access to the cellular network of the network provider at any location and/or at any time. This can be due to several reasons that are commonly known and need no further explanation.

In case there is no suitable WiFi nor a cellular network available that is associated to the (e)SIM of the mobile terminal, the user of the mobile terminal is not able to use Voice (Telephony) nor Data services (internet connectivity). This occurs even if there is another mobile network available with which the user has a contract but that does not belong to the service provider. That is because the (e)SIM of the network provider has no permission to access the other mobile network. We assume there is no national roaming in place.

A commonly used solution for such a case is that the user needs to subscribe to two (or more) mobile service providers running different networks and uses a Dual-SIM (or Triple-SIM etc.) device. This is cumbersome for the customer, as several services are tight to the mobile subscription. For example, voice/telephony service depends on the MSISDN, which is linked to a specific service/network provider. Hence, a use of two (or more) different national mobile numbers (MSISDNS) is often not desired by the user. Furthermore, it requires from the mobile customer to keep track of different subscriptions with their own restrictions related to available volume, speed etc.

EP 3 310018 A1 teaches method and a system for accessing through a second mobile telecommunication network to services offered by a first mobile telecommunication network. It comprises the steps of: establishing a first communication channel with the second network, based on a secondary SIM card; establishing a second communication channel with the first network using the first communication channel, wherein a user of the mobile communication device is authenticated using a primary SIM card; registering, through the second communication channel, the user of the mobile communication device into the first network using the information stored in the primary SIM card; and accessing from the mobile communication device to services offered by the first network through the second communication channel.

In the view of above, it is an object of the present invention to provide techniques to enable a mobile terminal to use a profile associated to a network provider even if the cellular network of this network provider is impaired.

This object is solved by the features of the independent claims.

The features of the various aspects of the invention described below or the various examples of implementation may be combined with each other, unless this is explicitly excluded or is technically impossible.

According to a first aspect of the invention, a method for providing a data connection between a mobile terminal and a first core network of a first cellular network by means of a first user profile of the first cellular network is described,
wherein the mobile terminal comprises a processing unit, a memory unit, and a first authentication module and a second authentication module,
wherein the first authentication module comprises a first user profile with first authentication information for access to the first cellular network,
wherein the second authentication module comprises a second user profile with second authentication information for access to a second cellular network, wherein the first authentication information cannot be used to access the second cellular network,
wherein the process comprises the following steps:
   Establishing the connection using an access network of the second cellular network using the second authentication information,
   Transmission of at least parts of the first authentication information to the first core network via the access network of the second cellular network,
   Authentication of the first user profile at the core network of the first cellular network using the transmitted initial authentication information;
   Providing the data connection using the transmitted first authentication information.

If the user prefers using the first cellular network of a first network provider because his telephone services are connected to his user profile of the first network provider, then the method provides the advantage that the user can access the first core network by means of his mobile terminal even if the first cellular (access) network is not available or impaired. The first authentication information can include a User-ID and/or a telephone number that are associated to the first user profile. Since at least parts of his first authentication information are also transmitted, this information can be provided to the first core network via the access network of the second cellular network so that the first service provider first core network actually "knows", which user requires certain services and process these services with the first authentication information as if the user would have accessed the first core network directly through the first cellular access network of the first network provider. For example, the user could use the popular WhatsApp service with a telephone number associated to his first user profile. In other words, the access network of the second cellular network serves only as a passive forwarding network.

It is a core idea of the invention that the mobile terminal comprises a cellular-to-WiFi converter that enables a first-user-profile-like data transmission with the second cellular network, wherein the second authentication module is connected to a cellular communication interface of the cellular-to-WiFi converter, and wherein the first authentication module and the memory unit are connected to cellular communication interface of the cellular-to-WiFi converter.

This provides the advantage that the cellular-to-WiFi converter can easily be implemented as an add-on in today's existing mobile terminals. As explained above, the method is already used, whenever a cellular device opens a personal hotspot for another mobile terminal to connect this other mobile terminal via WiFi. However, commonly there was always a second mobile terminal needed to provide the WiFi access to another cellular network. It is an additional advantage that the solution is now implemented within a single mobile terminal.

The mobile terminal can be a smart phone, a smartwatch, a tablet and/or a cellular access point.

In an embodiment, the first and/or the second authentication module are implemented as hardware or as software. The implementation of the authentication modules as hardware provides the advantage that already existing hardware modules can be used and that the modules can provide enhanced security since they are separated "hardware" units and not implemented inside the processor of a mobile terminal. The implementation of the authentication modules at software provides the advantage that in principle the number of different authentication modules is not limited due to space limitations. Hence, this offers the possibility to implement multiple authentication modules inside the processor. If there is one authentication module for each network provider which is in principle available, this offers a higher likelihood of accessing the access network of at least one of the network providers. An embodiment of the hardware solution could be a SIM-card, whereas a possible embodiment of the software solution of the authentication module could be a eSIM, in particular by using the eUICC technology.

The requirements regarding the two (e-)SIM profiles A and B are: Profile A represents the customer. It is a regular customer-related SIM/profile used for network access- as well as service-authentication. For the latter it represents a customer identity (IMSI) relating to an MSISDN assigned to that mobile customer. Profile B is a customer independent "data-only" SIM/profile, purely used for packet data network access authentication towards the UEs radio module. It must become active in certain network situations (see scenario 3 above) and attach to the UEs radio module, but only for the mentioned task. In this case profile A might have to be temporarily deactivated for packet data network connectivity and therefore detach from the UEs radio module (for single-radio devices). It is a crucial part of the invention that even in this case profile A remains active and responsible for all service-related authentication and identification aspects like telephony, SMS, WhatsApp identity etc. Profile B can be exchanged at any time, without impact on the customer's service experience. Regular (e)SIM security- and privacy-requirements apply to both profiles.

In an embodiment, the first user profile with the first authentication information is marked as an active profile and is kept active. This provides the advantage that the processing unit that controls the establishment of the data connection knows that the parts of the first authentication information shall be extracted from the first user profile.

In an embodiment, the mobile terminal is set up to communicate via a cellular mobile radio channel and/or via a Wi-Fi connection. This provides the advantage that the mobile terminal can also the WiFi connection to transmit the at least parts of the first authentication information to the first core network.

Preferably, the establishment of the data connection via the access network is initiated if neither the WiFi connection nor a connection to the first cellular network can be established. This provides the advantage that the access network is only used as a backup solution if all the other commonly used connection options fail. In general, it will be beneficial, e.g. under monetary aspects, for the user to use his preferred network provider or an existing WiFi connection.

It can be useful to initiate the establishment of the data connection via the access network if the access network provides better quality of service parameters compared to the first cellular network and/or the WiFi connection. This provides the advantage that the access network of another network provider can be used if the access network of the preferred first network provider cannot guarantee certain quality of service (QoS) parameters that an application running on the mobile terminal requires.

In an embodiment, the establishment of the connection via the access network is initiated in addition to the WiFi connection to increase the bandwidth. This provides the advantage that the access network of another network provider can be used to increase the data throughput of the mobile terminal.

The communication of the mobile terminal with the access network of the second cellular network can be based on a data protocol having a service data field for the first authentication information and an access data field for the second authentication information. This provides the advantage that an authentication unit of the second cellular network can distinguish which of the authentication information are related to its own network. Hence, the authentication unit of the second cellular network uses the second authentication information stored in the access data field to grant access to its network and transmits the first authentication information of the service data field to the first core network so that the core network can provide the first profile information, that can include a user terminal-ID or a user ID, to further services of the Internet.

In an embodiment, the first core network forwards the information of the service data field to further Internet-based services. This provides the advantage that those further services than only know about the first profile information relating to the first authentication module.

In an embodiment, the data protocol is a WiFi data protocol. This provides the advantage that already existing solutions can be used, whereas in the former case an adaption of the data protocol handling algorithms of the network providers is needed. It is already a common method today whenever a cellular device opens a personal hotspot for another mobile terminal to connect this other mobile terminal via WiFi.

In an embodiment, the cellular-to-WiFi converter provides a conversion of the cellular transmission protocol associated to the second authentication module to a WiFi transmission protocol associated to the first authentication module. This provides the advantage that the cellular-to-WiFi converter establishes an internet connection via the second cellular network of the second network provider by using the second authentication module in order to let this second authentication information appear like the first authentication information.

In an embodiment the second authentication module is temporarily attached to the cellular radio module and the first authentication module is temporarily detached to the cellular radio module. This provides the advantage that the second authentication module, in particular the second eSIM profile, replaces the first authentication module, in particular the first eSIM, regarding the cellular data connection. It could lead to interference effects if both authentication modules try to communicate over the cellular radio module.

According to a second aspect of the invention, a mobile terminal configured to provide a connection to a first core network of a first cellular network by means of a first user ID of the first cellular network is described, wherein the mobile terminal comprises a processing unit, a memory unit, and a first authentication module and a second authentication module, wherein the mobile terminal is configured to perform the steps of the method described above.

This mobile terminal provides the advantage that the user can access the first core network by means of his mobile terminal even if the first cellular (access) network is not available or impaired.

The mobile terminal comprises a cellular-to-WiFi converter. This provides the advantage that the cellular-to-WiFi converter can easily be implemented as an add-on in today's existing mobile terminals.

In the following, preferred implementation examples of the present invention are explained with reference to the accompanying figure:
- Fig. 1:: shows a mobile terminal.
- Fig. 2:: shows a first use case scenario of a conventional mobile terminal.
- Fig. 3:: shows a second use case scenario of the conventional mobile terminal.
- Fig. 4:: shows a mobile terminal equipped with a cellular-to-WiFi converter according to the invention.
- Fig. 5:: shows a flow chart of the inventive method to provide a data connection between a mobile terminal and a second cellular network, wherein the second cellular network is not related to the activated user profile of the mobile terminal.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

In the following description the term eSIM would be used as a specific form of a more generic authentication module. Within the disclosure of this invention is possible to use the eSIM as well as the more generic authentication module to gain the technical benefits of the invention.

Usually mobile terminal users have a preferred eSIM profile (or a conventional SIM - for the sake of convenience we shall only name the eSIM in the following, whereas the techniques could be also applied to SIM-cards) with a unique mobile number, wherein other Internet services are associated to this unique mobile number so that it is beneficial for the user to use this preferred eSIM profile.

However, it can happen that the mobile network associated with that eSIM is malfunctioning so that the user needs to use another eSIM that is associated to another network provider and his mobile network in order to be able to exchange data with the Internet through a data connection. Within the common Dual-SIM approach, the user is not able to use other Internet services with his unique mobile number associated to his preferred eSIM profile.

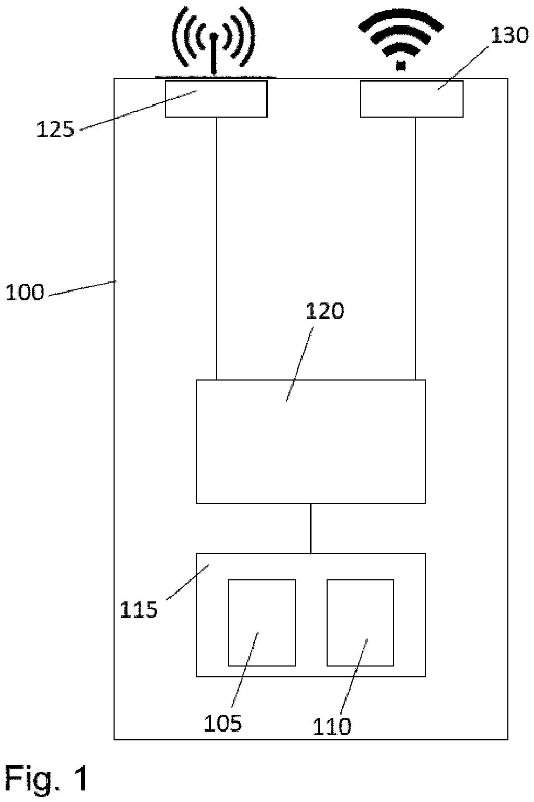

A first possibility to overcome this inconvenience is to implement a method that allows a mobile terminal 100 that is shown Fig. 1 to access a core network of his preferred cellular provider via an access network of a second network provider. To solve this task an adaption of the operating system of the mobile terminal 100 and an adaption of the data handling of the network providers needs to be performed.

A second possibility to overcome this inconvenience is to implement a cellular-to-WiFi converter into the mobile terminal.

### The first possibility:

A user of the mobile terminal 100 has stored at least two eSIM 105, 110 profiles in his mobile terminal 100, in particular within a memory unit 115 of the mobile terminal 100. The mobile terminal 100 comprises a processing unit 120 that controls the communication of the mobile terminal 100 over a cellular interface 125 and/or a WiFi interface 130.

The first eSIM profile 105 is associated to the unique mobile number the user uses regarding other internet services like WhatsApp. Contrary to the second possibility is the lack of a cellular-to-WiFi converter. In addition, the first possibility provides cellular connectivity even when WiFi is connected and can be combined with multi-connectivity approaches.

Data connectivity is always provided through the cellular interface 125 inside the mobile terminal 100. A selection logic implemented as an algorithm inside the processing unit 120 connects to an available cellular network according to the available (e)SIMs 105, 110 of the mobile terminal 100.

The selection can be based on one or of any combination of the following parameters: monetary costs (e.g. tariff), user preferences, network coverage, signal strength, location (GPS; triangulation Wi-Fi/Cellular), interruption mitigation.

The first eSIM 105 is defined as the preferred or primary eSIM profile, which is responsible for the cellular voice service and provides the unique mobile number.

Whenever WiFi connectivity is absent and cellular connectivity is used that does not correspond to the first eSIM 105, e.g. if the access network of another mobile provider that corresponds to the second eSIM profile 110 is used, then the operating system of the mobile terminal 100 establishes a voice channel according to the VoWiFi (Voice over WiFi) standard 3GPP TS 23.402 over the respective mobile network. Hence, the following steps are performed:
- Define a preferred (e)SIM profile, in particular the first eSIM profile 105, to be associated for the cellular voice service. It is possible that the forms the selection of the preferred eSIM profile by user input on the mobile terminal 100.
- Check for cellular network absence related to the current selected preferred mobile network related to the first eSIM profile 105 by the mobile terminal 100.
- Selecting an alternative/second mobile network, in particular the mobile network associated to the second eSIM profile 110, by the selection logic implemented on the processing unit 120.
- Performing a registration process to get access to the second mobile network.
- Proceeding with standard mechanisms regarding to providing data connectivity over the cellular interface 125 of the mobile terminal 100.
- Optional: Check that the connected cellular network is not associated to the first eSIM profile 105.
- Establish a voice connectivity by using VoWiFi in conjunction with the information, in particular the unique mobile number, of the preferred (e)SIM profile 105 over the active cellular connection, wherein an algorithm implemented on the processing unit 120 performs the necessary adjustments of the data protocols, in particular to include the unique mobile number. In an embodiment, a cellular-to-WiFi converter functionality is implemented as software inside the operating system.

The cellular-to-WiFi converter functionality of the operating system ensures that services like WhatsApp have access to the required information of the unique mobile number of the first eSIM profile 105 without hassle.

In case the (e)SIM Profile 150 provides the information for the WhatsApp Service like the cellular phone number, this has also to be ensured when the (e)SIM Profile 110 becomes active. In that case a converter can provide the (e)SIM Profile 105 information through APIs of the operating system.

Possibly this means for the Android OS that the "https://developer.android.com/reference/android/telephony/SubscriptionMa nager#getActiveSubscriptionlnfoList()" will return (e)SIM Profile 105 information even if (e)SIM Profile 110 is used. Possibly the selected Profile information announced are dependent on the definition of the primary/preferred (e)SIM profile responsible for the cellular voice service.

### The second possibility:

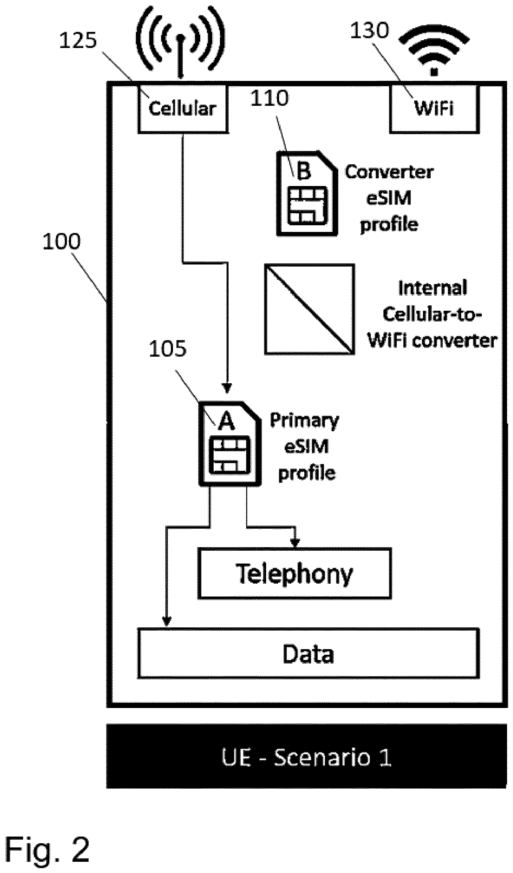

The mobile terminal 100 of Fig. 2-4 supports voice (telephony) and data services. The mobile terminal 100 also supports the eUICC technology, which can provide multiple eSIM profiles. In principle, the invention is not limited to the use of eUICC, as a similar configuration can also be implemented using Dual- or Triple-SIM solutions as hardware units.

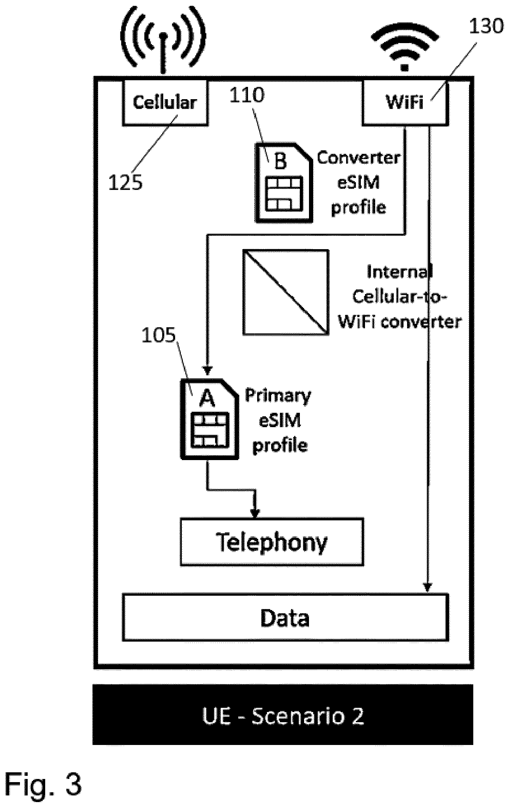

A common use case scenario is shown in Fig. 2. The first eSIM profile 105 is selected as the preferred/primary eSIM profile and the mobile terminal only communicates via the first eSIM profile 105 or as shown in Fig. 3 via WiFi interface 130.

In the case that the network of the mobile provider associated to the first eSIM profile 105 is not accessible and additionally no WiFi is available, the mobile terminal 100 can communicate to an alternative network over the second eSIM profile 110.

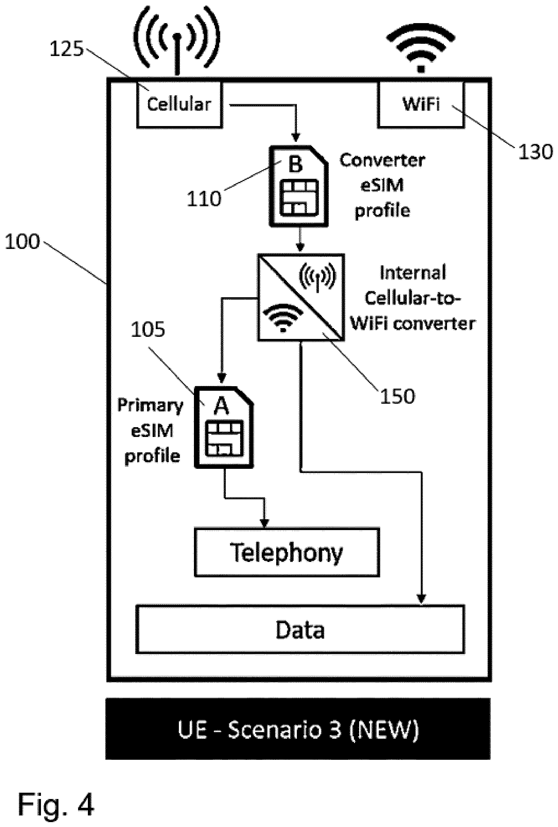

This case is shown in Fig. 4. The first eSIM profile 105 is selected as being the active eSIM profile and the second eSIM profile 110 is defined as being the "converter" eSIM profile. The second eSIM profile 110 can connect to the alternative mobile network, which is not the network related to the active eSIM profile 105. However, in contrast to commonly used Dual-SIM approaches Internet services within the core network shall only "see" the unique mobile number of the first eSIM profile 105 since they are only registered with the unique mobile number of the first eSIM profile 105.

For this purpose, a cellular-to-WiFi converter 150 resides inside the mobile terminal 100 and connects connectivity coming from the cellular interface 125 so that it appears to the operating system of the mobile terminal 100 is being connectivity coming from a WiFi network. Hence, the cellular-to-WiFi converter 150 comprises a WiFi interface 155 to which the first eSIM profile 105 and the memory unit 115 are connected and a cellular interface 162 which the second eSIM profile 110 is connected. This is - as an external function - a common method used today whenever a cellular device offers a personal hotspot for other devices to connect via WiFi, while the "donor" device is connected to the internet via a cellular connectivity. The advantage is that no other device is needed that offers the personal hotspot but that this "external conversion function" is implemented within a single device by means of the cellular-to-WiFi converter 150.

After converting the alternative cellular connectivity provided by the second eSIM 110, all services (voice/telephony and data) can be used seamlessly in the context of the first eSIM profile 105, i.e. data services as via a WiFi network and voice/telephony services as Voice-over-WiFi, continuously using the active (primary) MSISDN related to the active first is in profile 105 of the user.

In the normal case there is enough cellular network resource available, which can be used by via active eSIM profile 105 (see Fig. 2) or there is sufficient WiFi network resource available (see Fig. 3), these network resources are used for voice and data services on that UE and there is generally no need to use the second eSIM profile 110 as a converter profile.

The invention is especially beneficial if there are (temporarily) no resources of the active eSIM profile 105 and the WiFi connectivity are available and if cellular network resources of the alternative connectivity cellular network are available that are related to the second eSIM profile 110. In such a situation, the mobile terminal 100 performs the following steps:
- Checking if the first cellular network related to the first eSIM profile 105 is available, wherein the first eSIM profile 110 is the active and preferred eSIM profile with the unique mobile number the user wishes to use in the context of further Internet services;
- Checking if the Wi-Fi connection is available;

If neither the first cellular network nor the Wi-Fi connection is available, then continue with the following steps:
- Checking if an alternative cellular network is available, in particular the second cellular network related to the second eSIM profile 110;
- Register the cellular radio module of the cellular interface 125 of the mobile terminal 100 with the second eSIM profile 110 information at the second cellular network that corresponds to the second eSIM profile 110;
- Using the cellular-to-WiFi converter 150 to convert the cellular connectivity to a WiFi-like connectivity by "translating" the respective data protocols and transmit the WiFi-like connectivity to the operating system of the mobile terminal 100 as an established WiFi data connection.
   ∘ Preferably, the steps of the data protocol conversion can include to translate cellular specific information to corresponding WiFi information, which are expected by the operating system of the mobile terminal from a regular WiFi access point. This can comprise the translation of i) signal parameters, and in particular the translation "LTE RSSI to WiFi RSSI" or "Bandwidth, Modulation, MiMo to WiFi Link Speed", ii) "Mobile network operator name to SSID", iii) "Cellular IP address to Wi-Fi IP address", and in particular "1:1 pass through" or "NAT", iv) "Cellular DNS server to WiFi IP address", and/or v) "Cellular GW to Wi-Fi GW".
   ∘ Preferably, the steps of the data protocol conversion can include the determination of certain parameters like i) Security: WPA2-PSK, ii) MAC-Address, iii) Frequency domain, e.g. 5GHz.
   ∘ Preferably, the use of the cellular-to-WiFi converter 150 can be restricted to specific cellular standards 2G or 3G or 4G or 5G or a combination thereof.
- Proceeding with the standard regular mechanism known today to provide data connectivity over WiFi to the mobile terminal 100 in the presence of the active first eSIM 105.
   o Using the established data connectivity for all data services;
   o Using the established data connectivity to connect to the IMS system related to the first eSIM profile 105 to start the Voice over-WiFi service.

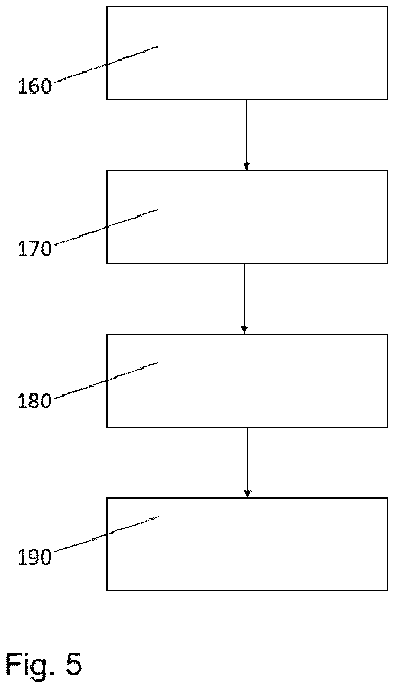

Fig. 5 shows the flow chart of the generic approach of the invention to provide a data connection between the mobile terminal 100 and a second cellular network, wherein the second cellular network is not related to the activated eSIM profile 105 of the mobile terminal 100. The following steps are performed at least in part by the mobile terminal 100.
Step 160: Establishing the data connection using an access network of the second cellular network using the second authentication information;
Step 170: Transmission of at least parts of the first authentication information to the first core network via the access network of the second cellular network;
Step 180: Authentication of the first user profile that is related to the first eSIM profile 105 at the core network of the first cellular network using the transmitted initial authentication information;
Step 190: Providing the data connection using the transmitted first authentication information.

In summary: The cellular-to-WiFi converter establishes the data connection via the cellular network of the alternative mobile operator by using the secondary SIM card/eSIM profile and makes this data connection appear as if the mobile terminal would communicate as a WiFi connection by means of the preferred eSIM profile 105. Thus, all services can be used seamlessly, e.g. voice / telephony is handled as Voice-over-WiFi.

## Claims

1. A method for providing a data connection between a mobile terminal and a first core network of a first cellular network of the first cellular network, the mobile terminal comprising a processing unit, a memory unit, and a first authentication module and a second authentication module,
wherein the first authentication module comprises a first user profile with first authentication information for access to the first cellular network,
wherein the second authentication module comprises a second user profile with second authentication information for access to a second cellular network,
wherein the process comprises the following steps:
Establishing the data connection using an access network of the second cellular network using the second authentication information,
Transmission of at least parts of the first authentication information to the first core network via the access network of the second cellular network,
Authentication of the first user profile at the first core network, in particular at the first core network of the first cellular network, using the at least parts of the first authentication information;
Providing the data connection using the transmitted first authentication information,
**characterized in that**
the mobile terminal comprises a cellular-to-WiFi converter that enables a first-user-profile-like data transmission with the second cellular network, wherein the second authentication module is connected to a cellular communication interface of the cellular-to-WiFi converter, and wherein the first authentication module and the memory unit are connected to cellular communication interface of the cellular-to-WiFi converter.

2. The method of claim 1, wherein the cellular-to-WiFi converter provides a conversion of the cellular transmission protocol associated to the second authentication module to a WiFi transmission protocol associated to the first authentication module.

3. The method of claims 1 to 3, wherein the second authentication module is temporarily attached to the cellular radio module and the first authentication module is temporarily detached to the cellular radio module.

4. A mobile terminal configured to provide a connection to a first core network of a first cellular network by means of a first user ID of the first cellular network, the mobile terminal comprising a processing unit, a memory unit, and a first authentication module and a second authentication module,
wherein the mobile terminal comprises a cellular-to-WiFi converter and is configured to perform the steps of the method according to claim 1.

## Patentansprüche

1. Verfahren zum Bereitstellen einer Datenverbindung zwischen einem mobilen Endgerät und einem ersten Kernnetzwerk eines ersten zellularen Netzwerks des ersten zellularen Netzwerks, wobei das mobile Endgerät eine Verarbeitungseinheit, eine Speichereinheit und ein erstes Authentifizierungsmodul und ein zweites Authentifizierungsmodul aufweist,
wobei das erste Authentifizierungsmodul ein erstes Benutzerprofil mit ersten Authentifizierungsinformationen für Zugriff auf das erste zellulare Netzwerk umfasst,
wobei das zweite Authentifizierungsmodul ein zweites Benutzerprofil mit zweiten Authentifizierungsinformationen für Zugriff auf ein zweites zellulares Netzwerk umfasst,
wobei das Verfahren die folgenden Schritte umfasst:
Herstellen der Datenverbindung unter Verwendung eines Zugangsnetzwerks des zweiten zellularen Netzwerks unter Verwendung der zweiten Authentifizierungsinformationen,
Übertragen mindestens von Teilen der ersten Authentifizierungsinformationen an das erste Kernnetzwerk über das Zugangsnetzwerk des zweiten zellularen Netzwerks,
Authentifizieren des ersten Benutzerprofiles bei dem ersten Kernnetzwerk, insbesondere bei dem ersten Kernnetzwerk des ersten zellularen Netzwerks, unter Verwendung der mindestens Teile der ersten Authentifizierungsinformationen;
Bereitstellen der Datenverbindung unter Verwendung der übertragenen ersten Authentifizierungsinformationen,
**dadurch gekennzeichnet, dass**
das mobile Endgerät einen Zellular-nach-WiFi-Umwandler aufweist, der eine erstes-Benutzerprofil-artige Datenübertragung mit dem zweiten zellularen Netzwerk ermöglicht, wobei das zweite Authentifizierungsmodul mit einer zellularen Kommunikationsschnittstelle des Zellular-nach-WiFi-Umwandlers verbunden ist, und
wobei das erste Authentifizierungsmodul und die Speichereinheit mit einer zellularen Kommunikationsschnittstelle des Zellular-nach-WiFi-Umwandlers verbunden sind.

2. Verfahren nach Anspruch 1, wobei der Zellular-nach-WiFi-Umwandler eine Umwandlung des zellularen Übertragungsprotokolls, das mit dem zweiten Authentifizierungsmodul assoziiert ist, in ein WiFi-Übertragungsprotokoll bereitstellt, das mit dem ersten Authentifizierungsmodul assoziiert ist.

3. Verfahren nach Ansprüchen 1 bis 3, wobei das zweite Authentifizierungsmodul temporär an das zellulare Funkmodul angebunden und das erste Authentifizierungsmodul temporär von dem zellularen Funkmodul getrennt wird.

4. Mobiles Endgerät, welches dazu eingerichtet ist, eine Verbindung mit einem ersten Kernnetzwerk eines ersten zellularen Netzwerks mittels einer ersten Benutzer-ID des ersten zellularen Netzwerks bereitzustellen, wobei das mobile Endgerät eine Verarbeitungseinheit, eine Speichereinheit und ein erstes Authentifizierungsmodul und ein zweites Authentifizierungsmodul aufweist,
wobei das mobile Endgerät einen Zellular-nach-WiFi-Umwandler aufweist und dazu eingerichtet ist, die Schritte des Verfahrens nach Anspruch 1 durchzuführen.

## Revendications

1. Procédé permettant de fournir une connexion de données entre un terminal mobile et un premier réseau central d'un premier réseau cellulaire du premier réseau cellulaire, le terminal mobile comprenant une unité de traitement, une unité de mémoire et un premier module d'authentification et un deuxième module d'authentification,
dans lequel le premier module d'authentification comprend un premier profil d'utilisateur avec des premières informations d'authentification pour accéder au premier réseau cellulaire,
dans lequel le deuxième module d'authentification comprend un deuxième profil d'utilisateur avec des deuxièmes informations d'authentification pour accéder à un deuxième réseau cellulaire, le procédé comprenant les étapes suivantes :
l'établissement de la connexion de données à l'aide d'un réseau d'accès du deuxième réseau cellulaire à l'aide des deuxièmes informations d'authentification,
la transmission d'au moins des parties des premières informations d'authentification au premier réseau central via le réseau d'accès du deuxième réseau cellulaire,
l'authentification du premier profil d'utilisateur au niveau du premier réseau central, en particulier au niveau du premier réseau central du premier réseau cellulaire, à l'aide des au moins parties des premières informations d'authentification ;
la fourniture de la connexion de données à l'aide des premières informations d'authentification transmises,
**caractérisé en ce que**
le terminal mobile comprend un convertisseur cellulaire-WiFi qui permet une transmission de données de type premier profil d'utilisateur avec le deuxième réseau cellulaire, dans lequel le deuxième module d'authentification est connecté à une interface de communication cellulaire du convertisseur cellulaire-WiFi, et
dans lequel le premier module d'authentification et l'unité de mémoire sont connectés à l'interface de communication cellulaire du convertisseur cellulaire-WiFi.

2. Procédé selon la revendication 1, dans lequel le convertisseur cellulaire-WiFi fournit une conversion du protocole de transmission cellulaire associé au deuxième module d'authentification en un protocole de transmission WiFi associé au premier module d'authentification.

3. Procédé selon les revendications 1 à 3, dans lequel le deuxième module d'authentification est temporairement rattaché au module radio cellulaire et le premier module d'authentification est temporairement détaché du module radio cellulaire.

4. Terminal mobile configuré pour fournir une connexion à un premier réseau central d'un premier réseau cellulaire au moyen d'un premier identifiant d'utilisateur du premier réseau cellulaire, le terminal mobile comprenant une unité de traitement, une unité de mémoire et un premier module d'authentification et un deuxième module d'authentification,
dans lequel le terminal mobile comprend un convertisseur cellulaire vers WiFi et est configuré pour exécuter les étapes du procédé selon la revendication 1.
